# EUROPÄISCHE PATENTSCHRIFT

(11) **EP 2 348 792 B1**
(45) Veröffentlichungstag und Bekanntmachung des Hinweises auf die Patenterteilung: **12.05.2021**
(21) Anmeldenummer: 10014724.8
(22) Anmeldetag: 18.11.2010
(51) Int. Cl.: H05B 45/00, H05B 45/37, H02G 3/12, F21S 8/02

(54) **Unterputz-LED-Leuchte**
Built-in LED lamp
Lampe à DEL encastrée

(30) Priorität: 23.01.2010 DE 102010005504
(43) Veröffentlichungstag der Anmeldung: 27.07.2011
(73) Patentinhaber: ABB Schweiz AG, 5400 Baden (CH)
(72) Erfinder: Gerrath, Volker, 58791 Werdohl-Eveking (DE); Diehl, Sven, Dipl.-Ing., 57078 Siegen (DE); Zapp, Robert, Dipl.-Ing., 58579 Schalksmühle (DE); Lange, Manfred, Dipl.-Ing., 44229 Dortmund (DE); Boremski, Markus, 41812 Erkelenz (DE)
(74) Vertreter: Marks, Frank

(56) Entgegenhaltungen:
- EP-A1- 2 145 129
- EP-A2- 1 493 621
- EP-A2- 1 944 784
- WO-A1-2008/129485
- DE-A1- 19 919 080
- DE-U1- 29 904 174
- JP-A- H11 109 918
- US-A1- 2008 106 218
- US-B1- 6 333 608

## Beschreibung

Die Erfindung betrifft eine Unterputz-LED-Leuchte für den Einbau in eine handelsübliche UP-Gerätedose (insbesondere nach DIN 49073).

Aus der DE 203 13 428 U1 ist eine aus einer Montageplatte, einer mit Leuchtdioden und gegebenenfalls weiteren elektronischen Bauteilen bestückten Leiterplatte mit Stromzuführungsleitungen, einer Lichtverteilungsscheibe und einem Blendrahmen mit einer Lichtaustrittsöffnung bestehende Leuchte bekannt. Die Stromzuführungsleitungen sind zu einer im Wesentlichen hinter der Leuchte angeordneten Anschlussdose geführt, in der ein an das Stromnetz anschließbarer Transformator angeordnet ist. Es können die Anschlussleitungen mehrerer Leuchten hinter einem Wandbelag (Fliesen, Fliesenspiegel) zu einer zentralen Anschlussstelle geführt sein, an der eine Niederspannungsquelle (Trafo) installiert ist.

Aus der DE 199 19 080 A1 ist eine Beleuchtungseinrichtung zum Beleuchten von Flächen oder Räumen bekannt, bei der lichtemittierende Halbleiterelemente als Lichtquellen vorgesehen sind, die über elektronische Baugruppen angesteuert und mit Strom versorgt werden.

Aus der DE 10 2007 001 850 B3 ist ein Installationsschalter oder -taster mit Gerätesockel, Wippe und Beleuchtung bekannt, wobei ein Lichtleiter an der Rückseite der Wippe angeordnet ist und wobei im Gerätesockel ein Lampenhalter mit einer Lampe angeordnet ist, deren Licht in eine Lichteintrittsfläche des Lichtleiters strahlt. Die Wippe weist an ihrer bei montiertem Installationsschalter oder -taster vorzugsweise in Richtung Fußboden weisenden Seitenkante eine Lichtaustrittsöffnung auf, welche eine Lichtaustrittsfläche des Lichtleiters aufnimmt, so dass der unterhalb des montierten Installationsschalters oder -tasters befindliche Fußboden erhellt wird. Bei Ausführung als Installationsschalter mit zwei unterschiedlichen Stellungen der Wippe wird die Lampe lediglich in der Ausschalt-Stellung der Wippe eingeschaltet, während die Lampe in der Einschalt-Stellung der Wippe ausgeschaltet bleibt. Zwar strahlt die Lichtaustrittsöffnung vorzugsweise in Richtung Fußboden, alternativ kann der Installationsschalter oder -taster jedoch auch um 180° gedreht montiert werden, so dass die Lichtaustrittsöffnung in Richtung Decke strahlt, was bei einer sehr hellen, vorzugsweise weißen Decke zur Reflexion des abgestrahlten Lichts führt, wodurch die gewünschte Fußbodenbeleuchtung realisiert wird.

Allgemein sind bei Leuchten je nach Einsatzzweck und Einsatzort unterschiedliche Lichtintensitäten wünschenswert. Da bei einer LED-Leuchte ein Auswechseln des Leuchtmittels nicht in einfacher Art und Weise erfolgen kann, wäre es erforderlich, LED-Leuchten unterschiedlicher Lichtintensität herzustellen und zu bevorraten, um je nach Einsatzzweck und Einsatzort die richtige LED-Leuchte zur Verfügung stellen zu können. Dies stellt jedoch einen gewissen Aufwand dar.

Der Erfindung liegt die Aufgabe zugrunde, eine Unterputz-LED-Leuchte anzugeben, welche universell für unterschiedliche Einsatzzwecke und Einsatzorte einsetzbar ist.

Diese Aufgabe wird erfindungsgemäß gelöst durch eine Unterputz-LED-Leuchte für den elektrischen und mechanischen Anschluss an einer handelsüblichen UP-Gerätedose gemäß Anspruch 1.

Die mit der Erfindung erzielbaren Vorteile bestehen insbesondere darin, dass ein- und dieselbe Unterputz-LED-Leuchte durch Umschaltung sowohl als Orientierungsleuchte mit relativ geringer Lichtintensität als auch als Strahler mit relativ hoher Lichtintensität verwendbar ist. Es wird eine Raumbeleuchtung durch LEDs aus der Unterputzdose heraus geschaffen, und zwar mit ein und derselben Unterputz-LED-Leuchte wahlweise vorgebbar als
- Funktionslicht mit voller Lichtintensität
- "Ambientelicht" mit reduzierter Lichtintensität
- Sekundärlicht mit reduzierter Lichtintensität.

Die Unterputz-LED-Leuchte wird komplettiert durch eine Abdeckung des LED-Leuchtmittels als "Zentralscheibe" und einen Abdeckrahmen, so dass eine formschöne Einbindung / Integration in ein Installationsgeräte -Programm respektive Schalter- und Steckdosenprogramm sowie eine Kombination mit weiteren Geräten, beispielsweise Schaltern / Tastern / Dimmern / Steckdosen dieses Schalter- und Steckdosenprogramms möglich ist.

Vorteilhafte Ausgestaltungen der Erfindung sind in den Unteransprüchen gekennzeichnet.

Die Erfindung wird nachstehend an Hand der in der Zeichnung dargestellten Ausführungsbeispiele erläutert. Es zeigen:
- Fig. 1: eine perspektivische Sicht auf die Frontseite eines Gerätesockels einer Unterputz-LED-Leuchte,
- Fig. 2: eine Lichtintensitätseinstellung der Unterputz-LED-Leuchte über einen Schalter,
- Fig. 3: eine Lichtintensitätseinstellung der Unterputz-LED-Leuchte über ein Potentiometer zur Regelung / Steuerung des Stromes durch die LEDs,
- Fig. 4: eine Lichtintensitätseinstellung der Unterputz-LED-Leuchte über ein Halbleiterelement,
- Fig. 5: eine Lichtintensitätseinstellung der Unterputz-LED-Leuchte über einen Jumper,
- Fig. 6: eine Lichtintensitätseinstellung der Unterputz-LED-Leuchte über über-brückbare Widerstände zur Steuerung des Stromes durch die LEDs.

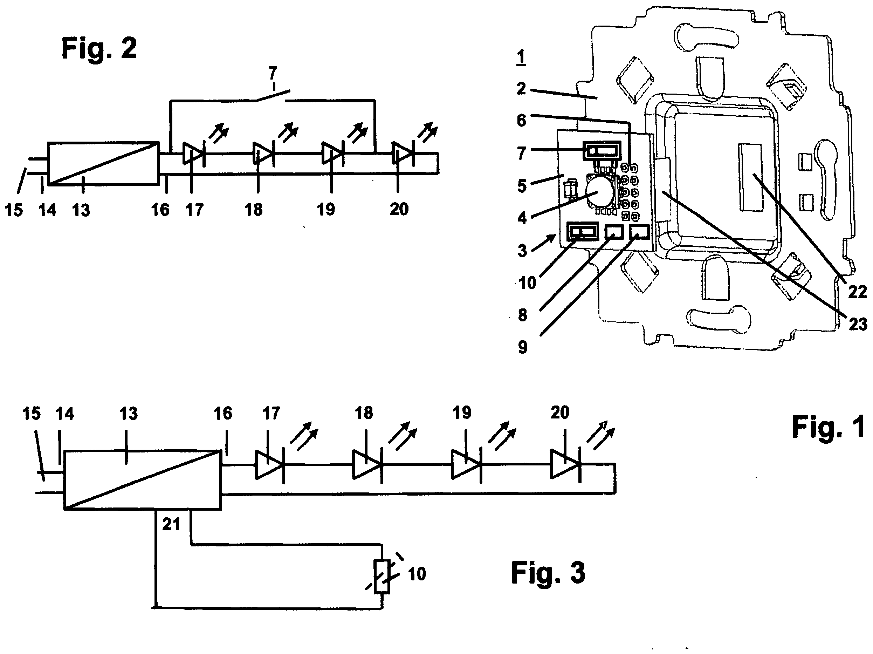

In Fig. 1 ist eine perspektivische Sicht auf die Frontseite eines Gerätesockels einer für den elektrischen und mechanischen Anschluss in einer handelsüblichen UP-Gerätedose geeigneten Unterputz-LED-Leuchte dargestellt. Es sind eine Tragplatte (Tragring) 2 und ein LED-Modul 3 der Unterputz-LED-Leuchte 1 zu erkennen, wobei sich die Tragplatte 2 großflächig über die gesamte Frontfläche eines verdeckten (nicht erkennbaren) Gerätesockels erstreckt und lediglich eine Ausnehmung 22 zum Durchgriff elektrischer Verbindungen zwischen Gerätesockel und LED-Modul aufweist, siehe Steckvorrichtung 23 des LED-Moduls 3.

Das LED-Modul 3 weist eine Leiterplatte 5 auf, auf welcher (mindestens) ein LED-Leuchtmittel 4, eine Einstellvorrichtung 7 zur Vorgabe einer gewünschten Lichtintensität des LED-Leuchtmittels respektive der Unterputz-LED-Leuchte sowie gegebenenfalls ein Widerstand 8, ein Transistor 9 und ein einstellbarer Widerstand 10 (Potentiometer) montiert sind. Ferner sind Lötpunkte 6 der Steckvorrichtung 23 skizziert. Das LED-Leuchtmittel 4 kann in Form separater (Einzel-) LEDs oder in Form sogenannter Multi-Chip-LEDs ausgebildet sein und beinhaltet mindestens zwei unabhängig voneinander schaltbare LEDs.

Der sich rückseitig der Tragplatte anschließende Gerätesockel enthält einen Konverter 13 (Netzteil) inklusive Primäranschluss 14 für den Anschluss von 230V-Netzleitungen 15 und Sekundäranschluss 16 zum Anschluss des mindestens zwei LEDs aufweisenden LED-Moduls 3. Mit der Einstellvorrichtung 7 zur Vorgabe einer gewünschten Lichtintensität ist mindestens eine der LEDs separat ein-/ausschaltbar respektive elektrisch leitend überbrückbar.

In Fig. 2 ist eine Lichtintensitätseinstellung der Unterputz-LED-Leuchte über einen Schalter dargestellt. Es ist der Konverter 13 (LED-Treiber, Netzteil) zu erkennen, mit einem Primäranschluss 14 zum Anschluss von 230V-Netzleitungen 15 und mit einem Sekundäranschluss 16 für den Anschluss mindestens eines LED-Leuchtmittels 4, welches wie gezeigt z. B. aus vier in Serie geschaltete LEDs 17, 18, 19, 20 gebildet ist.

Der leerlauf- und kurzschlussfeste Konverter 13 liefert einen Konstant-Gleichstrom, z. B. 350 mA. Die Umschalteinrichtung 7 zur Vorgabe einer gewünschten Lichtintensität ist beim gezeigten Ausführungsbeispiel in Form eines Schalters, wie Schiebeschalter oder Drehschalter, ausgebildet, und zwar ist der erste Anschluss dieses Schalters mit dem Sekundäranschluss 16 verbunden und der zweite Anschluss des Schalters liegt am gemeinsamen Verbindungspunkt der beiden LEDs 19, 20. Ist der Schalter geschlossen, so werden die LEDs 17, 18, 19 überbrückt und lediglich die LED 20 leuchtet, d. h. die Lichtintensität der Unterputz-LED-Leuchte ist reduziert. Ist der Schalter offen, leuchten alle LEDs 17, 18, 19, 20, d. h. die Lichtintensität der Unterputz-LED-Leuchte ist maximal.

Gemäß einer weiteren Ausführungsform kann die Einstellvorrichtung 7 zur Vorgabe einer gewünschten Lichtintensität in Form eines bistabilen Reedkontakts ausgebildet sein, welcher bei jeder Annäherung eines Magneten den aktuellen Schaltzustand "geöffnet" - "geschlossen" - "geöffnet" usw. wechselt. Der Vorteil bei dieser Ausführungsform besteht darin, dass es bei bereits montierter Unterputz-LED-Leuchte 1 zu einem späteren Zeitpunkt möglich ist, ohne Demontage einzelner Baukomponenten der Unterputz-LED-Leuchte 1 eine Änderung hinsichtlich der Lichtintensität vorzunehmen, d. h. es wird eine sehr bequeme, montagefreie Bedienbarkeit/Einstellbarkeit von außen per Magnet ermöglicht.

Gemäß einer weiteren Ausführungsform kann die Einstellvorrichtung 7 zur Vorgabe einer gewünschten Lichtintensität in Form eines von einem Bewegungsmelder (PIR-Sensor) angesteuerten Schalters ausgebildet sein, d. h. sobald der Bewegungsmelder eine Person detektiert, wird die volle Lichtintensität der Unterputz-LED-Leuchte 1 eingeschaltet (alle LEDs leuchten: Strahler mit hoher Lichtintensität) und sobald mittels des Bewegungsmelders keine Person mehr erfasst wird, wird die verminderte Lichtintensität eingeschaltet (nur eine LED leuchtet: Orientierungslicht mit verringerter Lichtintensität).

In Fig. 3 ist eine Lichtintensitätseinstellung der Unterputz-LED-Leuchte über ein Potentiometer zur Regelung / Steuerung des Stromes durch die LEDs dargestellt. Am Sekundäranschluss 16 des Konverters 13 sind wiederum vier LEDs 17, 18, 19, 20 in Serie geschaltet. Der Konverter 13 weist einen Ansteueranschluss 21 auf, an welchen ein einstellbarer Widerstand 10 (Potentiometer) zur Einstellung des am Sekundäranschluss 16 anstehenden Konstant-Gleichstroms angeschlossen ist. Durch Betätigung des einstellbaren Widerstandes 10 ist der dem LED-Modul und damit den einzelnen LEDs zugeführte Strom zur Vorgabe einer gewünschten Lichtintensität veränderbar / einstellbar. Ferner kann durch Betätigung des einstellbaren Widerstandes 10 ein Feinabgleich der Lichtintensität erfolgen, um z. B. bei mehreren, benachbart angeordneten Unterputz-LED-Leuchten sicherzustellen, dass alle Unterputz-LED-Leuchten mit der gleichen Lichtintensität leuchten.

Bei einer hierzu vereinfachten Ausführungsform kann an Stelle des einstellbaren Widerstandes 10 (Potentiometer) ein fester Widerstand über einen Schalter ein-/ausgeschaltet werden. Bei dieser vereinfachten Ausführungsform ist es durch Betätigung des Schalters möglich, zwei unterschiedliche Werte für den ausgangsseitigen Konstant-Gleichstrom des Konverters 13 einzustellen, um hierdurch zwei unterschiedliche Werte für die Lichtintensität der Unterputz-LED-Leuchte 1 vorgeben zu können. Diese Ansteuerung ist besonders dann vorteilhaft, wenn der Zugang zu den einzelnen LEDs nicht möglich ist oder nur eine LED verwendet wird.

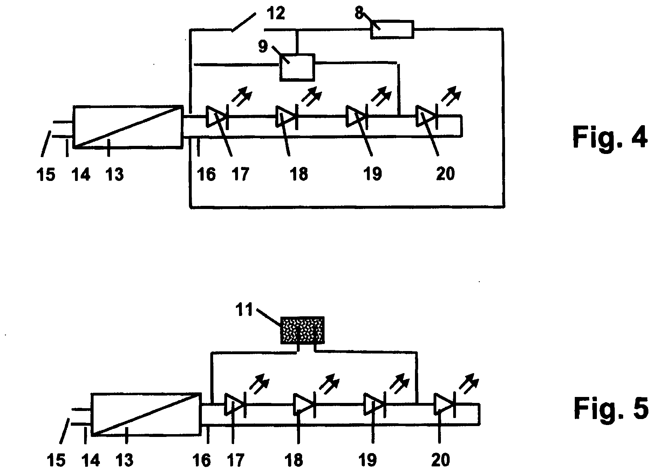

In Fig. 4 ist eine Lichtintensitätseinstellung der Unterputz-LED-Leuchte über ein Halbleiterelement dargestellt. Bei diesem Ausführungsbeispiel wird Rücksicht darauf genommen, dass Miniaturschalter oftmals nicht in der Lage sind, Gleichströme von 350 mA und mehr zu schalten respektive permanent zu führen. Dementsprechend ist ein Transistor 9 für die Überbrückung einer oder mehrerer LED(s) vorgesehen, d. h. die Einstellvorrichtung 7 zur Vorgabe einer gewünschten Lichtintensität ist in Form eines ansteuerbaren Halbleiterelements, insbesondere Transistors 9 ausgebildet. Die Serienschaltung eines Schalters 12 mit einem Widerstand 8 liegt am Sekundäranschluss 16 des Konverters 13. Der Ansteueranschluss des Transistors 9 liegt am gemeinsamen Verbindungspunkt des Schalters 12 mit dem Widerstand 8. Sobald der Schalter 12 geschlossen ist, wird auch der Transistor 9 "eingeschaltet". Sobald der Schalter 12 geöffnet wird, wird auch der Transistor 9 "ausgeschalter".

In Fig. 5 ist eine Lichtintensitätseinstellung der Unterputz-LED-Leuchte über einen Jumper dargestellt. Das Ausführungsbeispiel entspricht der in Fig. 2 erläuterten Ausführungsform, wobei jedoch als Einstellvorrichtung 7 zur Vorgabe einer gewünschten Lichtintensität konkret ein(e) Jumper / Drahtbrücke 11 vorgesehen ist. Sobald der Jumper 11 mechanisch eingesetzt ist, werden die LEDs 17, 18, 19 elektrisch überbrückt, d. h. es leuchtet lediglich die LED 20 und es liegt der Fall einer mit reduzierter Lichtintensität betriebenen Unterputz-LED-Leuchte 1 vor. Sobald der Jumper 11 entfernt ist, leuchten alle vier LEDs 17 - 20 und es liegt der Fall einer mit maximaler Lichtintensität betriebenen Unterputz-LED-Leuchte 1 vor. In ähnlicher Weise kann die Einstellvorrichtung 7 zur Vorgabe einer gewünschten Lichtintensität auch in Form einer Lötbrücke (fest verlötete Drahtbrücke) ausgebildet sein.

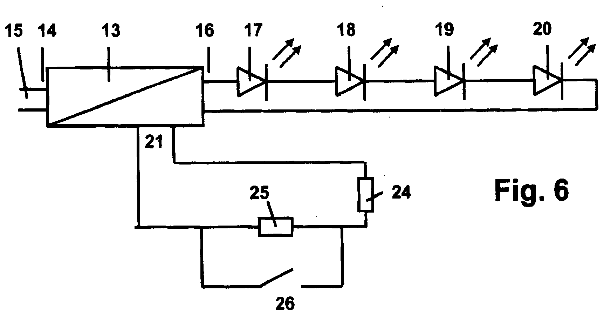

In Fig. 6 ist eine Lichtintensitätseinstellung der Unterputz-LED-Leuchte über überbrückbare Widerstände zur Steuerung des Stromes durch die LEDs dargestellt. Die Konfiguration entspricht derjenigen unter Fig. 3 gezeigten Konfiguration, jedoch sind zwei in Serie geschaltete Widerstände 24 und 25 an Stelle des einstellbaren Widerstandes 10 an den Ansteueranschluss 21 geschaltet, wobei der Widerstand 25 mittels eines Schalters 26 überbrückt werden kann. Durch Schließen / Öffnen des Schalters 26 sind zwei unterschiedliche Stromwerte für die LEDs vorgebbar.

### Bezugszeichenliste

- 1: Unterputz-LED-Leuchte mit Gerätesockel (inklusive Konverter, Steuer-/Regeleinrichtung, Anschlusseinheit für 230V-Netzleitungen)
- 2: Tragplatte (Tragring)
- 3: LED-Modul
- 4: LED-Leuchtmittel
- 5: Leiterplatte
- 6: Lötpunkte der Steckvorrichtung 23
- 7: Einstellvorrichtung zur Vorgabe einer gewünschten Lichtintensität (Schalter, Schiebeschalter, Drehschalter, Jumper, Lötbrücke, Drahtbrücke, bistabiler Reedkontakt, Bewegungsmelder) zur Überbrückung von LEDs des LED-Leuchtmittels
- 8: Widerstand
- 9: Transistor
- 10: einstellbarer Widerstand (Potentiometer)
- 11: Jumper
- 12: -
- 13: Konverter (Netzteil, LED-Treiber, liefert Konstant-Gleichstrom am Ausgang, z. B. 350 mA)
- 14: Primäranschluss
- 15: 230V-Netzleitungen
- 16: Sekundäranschluss
- 17: LED
- 18: LED
- 19: LED
- 20: LED
- 21: Ansteueranschluss des Konverters
- 22: Ausnehmung
- 23: Steckvorrichtung
- 24: Widerstand
- 25: Widerstand
- 26: Schalter

## Patentansprüche

1. Unterputz-LED-Leuchte (1) für den elektrischen und mechanischen Anschluss in einer handelsüblichen UP-Gerätedose,
- mit einer Einstellvorrichtung (7 -11) zur Vorgabe einer gewünschten Lichtintensität, mit welcher entweder der einem LED-Modul (3) der Unterputz-LED-Leuchte (1) zugeführte Strom einstellbar ist oder mittels der bei einem mindestens zwei LEDs (17 - 20) aufweisenden LED-Modul (3) der Unterputz-LED-Leuchte (1) mindestens eine der LEDs (17 - 20) separat ein-/ausschaltbar respektive elektrisch überbrückbar ist,
**gekennzeichnet durch**
- einen Gerätesockel, welcher einen Konverter (13) inklusive eines Primäranschlusses (14) für den Anschluss von 230V-Netzleitungen (15) und eines Sekundäranschlusses (16) zum Anschluss des LED-Moduls (3) beinhaltet, wobei
- sich eine Tragplatte (2) über die gesamte Frontfläche des Gerätesockels erstreckt und lediglich eine Ausnehmung (22) zum Durchgriff elektrischer Verbindungen zwischen dem Gerätesockel und dem LED-Modul (3) aufweist, und wobei
- das LED-Modul (3) eine Steckvorrichtung (23) aufweist.

2. Unterputz-LED-Leuchte nach Anspruch 1, **dadurch gekennzeichnet, dass** die Einstellvorrichtung (7) zur Vorgabe einer gewünschten Lichtintensität in Form eines Schalters, wie Schiebeschalter oder Drehschalter, ausgebildet ist.

3. Unterputz-LED-Leuchte nach Anspruch 1, **dadurch gekennzeichnet, dass** die Einstellvorrichtung (7) zur Vorgabe einer gewünschten Lichtintensität in Form eines Jumpers / Drahtbrücke (11) ausgebildet ist.

4. Unterputz-LED-Leuchte nach Anspruch 1, **dadurch gekennzeichnet, dass** die Einstellvorrichtung (7) zur Vorgabe einer gewünschten Lichtintensität in Form eines ansteuerbaren Halbleiterelements, insbesondere Transistors (9), ausgebildet ist.

5. Unterputz-LED-Leuchte nach Anspruch 1, **dadurch gekennzeichnet, dass** die Einstellvorrichtung (7) zur Vorgabe einer gewünschten Lichtintensität in Form einer Lötbrücke ausgebildet ist.

6. Unterputz-LED-Leuchte nach Anspruch 1, **dadurch gekennzeichnet, dass** die Einstellvorrichtung (7) zur Vorgabe einer gewünschten Lichtintensität in Form eines bistabilen Reedkontakts ausgebildet ist.

7. Unterputz-LED-Leuchte nach Anspruch 1, **dadurch gekennzeichnet, dass** die Einstellvorrichtung (7) zur Vorgabe einer gewünschten Lichtintensität in Form eines von einem Bewegungsmelder angesteuerten Schalters ausgebildet ist.

8. Unterputz-LED-Leuchte nach einem der vorstehenden Ansprüche, **dadurch gekennzeichnet, dass** der Konverter (13) einen Ansteueranschluss (21) aufweist, an welchen ein Widerstand (10, 24 + 25) zur Einstellung des am Sekundäranschluss (16) anstehenden Konstant-Gleichstroms angeschlossen ist.

9. Unterputz-LED-Leuchte nach Anspruch 8, **dadurch gekennzeichnet, dass** der Widerstand (10) einstellbar ist.

10. Unterputz-LED-Leuchte nach Anspruch 8, **dadurch gekennzeichnet, dass** ein Teil des Widerstands (24 + 25) mittels eines Schalters (26) überbrückbar ist.

## Claims

1. Flush-mounted LED luminaire (1) for electrical and mechanical connection in a commercially available flush-mounted device box,
- comprising a setting device (7 - 11) for predefining a desired light intensity, by which either the current fed to an LED module (3) of the flush-mounted LED luminaire (1) is settable or by means of which, in the case of an LED module (3) of the flush-mounted LED luminaire (1) having at least two LEDs (17 - 20), at least one of the LEDs (17 - 20) is separately switchable on/off or respectively electrically bridgeable,
**characterized by**
- a device base comprising a converter (13) including a primary connection (14) for the connection of 230 V mains lines (15) and a secondary connection (16) for connecting the LED module (3), wherein
- a supporting plate (2) extends over the entire front surface of the device base and has only one cutout (22) for feeding through electrical connections between the device base and the LED module (3), and wherein
- the LED module (3) has a plug device (23).

2. Flush-mounted LED luminaire according to Claim 1, **characterized in that** the setting device (7) for predefining a desired light intensity is embodied in the form of a switch, such as a sliding switch or rotary switch.

3. Flush-mounted LED luminaire according to Claim 1, **characterized in that** the setting device (7) for predefining a desired light intensity is embodied in the form of a jumper/wire bridge 11.

4. Flush-mounted LED luminaire according to Claim 1, **characterized in that** the setting device (7) for predefining a desired light intensity is embodied in the form of a driveable semiconductor element, in particular transistor (9).

5. Flush-mounted LED luminaire according to Claim 1, **characterized in that** the setting device (7) for predefining a desired light intensity is embodied in the form of a solder bridge.

6. Flush-mounted LED luminaire according to Claim 1, **characterized in that** the setting device (7) for predefining a desired light intensity is embodied in the form of a bistable reed contact.

7. Flush-mounted LED luminaire according to Claim 1, **characterized in that** the setting device (7) for predefining a desired light intensity is embodied in the form of a switch driven by a motion detector.

8. Flush-mounted LED luminaire according to any of the preceding claims, **characterized in that** the converter (13) has a drive connection (21), to which is connected a resistor (10, 24 + 25) for setting the constant DC current present at the secondary connection (16).

9. Flush-mounted LED luminaire according to Claim 8, **characterized in that** the resistor (10) is variable.

10. Flush-mounted LED luminaire according to Claim 8, **characterized in that** a part of the resistor (24 + 25) is bridgeable by means of a switch (26).

## Revendications

1. Lampe à DEL encastrée (1) pour la connexion électrique et mécanique dans une boîte de montage encastrable standard,
- comprenant un dispositif de réglage (7 à 11) pour spécifier une intensité de lumière souhaitée qui permet de régler le courant fourni à un module DEL (3) de la lampe à DEL encastrée (1), ou au moyen duquel, dans le cas d'un module DEL (3) de la lampe à DEL encastrée (1) présentant au moins deux DEL (17 à 20), au moins l'une des DEL (17 à 20) peut être séparément mise sous/hors tension ou pontée électriquement,
**caractérisée par**
- un socle d'appareil qui comporte un convertisseur (13) avec une borne primaire (14) pour la connexion de lignes du secteur à 230 V (15) et avec une borne secondaire (16) pour la connexion du module DEL (3), dans laquelle
- une plaque de support (2) s'étend sur toute la surface frontale du socle d'appareil et présente uniquement un évidement (22) pour le passage de liaisons électriques entre le socle d'appareil et le module DEL (3), et dans laquelle
- le module DEL (3) présente un dispositif enfichable (23).

2. Lampe à DEL encastrée selon la revendication 1, **caractérisée en ce que** le dispositif de réglage (7) pour spécifier une intensité de lumière souhaitée est réalisé sous la forme d'un commutateur, tel qu'un commutateur coulissant ou un commutateur rotatif.

3. Lampe à DEL encastrée selon la revendication 1, **caractérisée en ce que** le dispositif de réglage (7) pour spécifier une intensité de lumière souhaitée est réalisé sous la forme d'un cavalier/ pontage à fil (11).

4. Lampe à DEL encastrée selon la revendication 1, **caractérisée en ce que** le dispositif de réglage (7) pour spécifier une intensité de lumière souhaitée est réalisé sous la forme d'un élément semi-conducteur pilotable, en particulier d'un transistor (9).

5. Lampe à DEL encastrée selon la revendication 1, **caractérisée en ce que** le dispositif de réglage (7) pour spécifier une intensité de lumière souhaitée est réalisé sous la forme d'un pont de soudure.

6. Lampe à DEL encastrée selon la revendication 1, **caractérisée en ce que** le dispositif de réglage (7) pour spécifier une intensité de lumière souhaitée est réalisé sous la forme d'un contact à lames souples bistable.

7. Lampe à DEL encastrée selon la revendication 1, **caractérisée en ce que** le dispositif de réglage (7) pour spécifier une intensité de lumière souhaitée est réalisé sous la forme d'un commutateur piloté par un détecteur de mouvement.

8. Lampe à DEL encastrée selon l'une quelconque des revendications précédentes, **caractérisée en ce que** le convertisseur (13) présente une borne de pilotage (21) à laquelle est connectée une résistance (10, 24 + 25) pour régler le courant continu constant appliqué à la borne secondaire (16).

9. Lampe à DEL encastrée selon la revendication 8, **caractérisée en ce que** la résistance (10) est réglable.

10. Lampe à DEL encastrée selon la revendication 8, **caractérisée en ce qu'**une partie de la résistance (24 + 25) peut être pontée au moyen d'un commutateur (26).
